# EUROPEAN PATENT SPECIFICATION

(11) **EP 2 334 035 B1**
(45) Date of publication and mention of the grant of the patent: **19.06.2019**
(21) Application number: 09179040.2
(22) Date of filing: 14.12.2009
(51) Int. Cl.: H04L 29/08

(54) **Managing presence information in a communications system**
Verwaltung von Präsenzinformationen in einem Kommunikationssystem
Gestion des informations de présence dans un système de communication

(43) Date of publication of application: 15.06.2011
(73) Proprietor: Telia Company AB, 169 94 Solna (SE)
(72) Inventor: Pihlajamäki, Antti, 00580, Helsinki (FI); Ala-Luukko, Sami, 00200, Helsinki (FI)
(74) Representative: Kolster Oy Ab

(56) References cited:
- WO-A2-2004/008178
- US-A1- 2009 228 584
- GSM Association: "Rich Communication Suite Release 2 Service Definition" 31 August 2009 (2009-08-31), pages 1-25, XP002589538 Retrieved from the Internet: URL:http://www.gsmworld.com/documents/rcs/ rcs2_june09/R2_090831_RCS_Release_2_Servic e_Definition_v1_0update.pdf [retrieved on 2010-06-28]

## Description

### FIELD OF THE INVENTION

The present solution relates to managing presence information related to a user terminal.

### BACKGROUND OF THE INVENTION

A rich communication suite (RCS) initiative is an effort of a group of telecommunications operators and vendors to enhance the adoption of enhanced mobile applications and services, providing an interoperable, convergent, rich communication experience. A presence service is an integral part of most multimedia services, basically showing the user's availability and/or willingness for communication. Regarding a presence data model, a rich communication suite (RCS) document (i.e. a presence document) may be used for presence exchange.

One of the disadvantages associated with the above arrangement is that is that in current systems presence information can only be charged based on transmitted data volume, the number of messages, etc. This type of charging does not necessarily reflect the user experienced value, i.e. it is really not service-based.

A publication "GSM association: Rich communication suite, Release 2, Service definition" discloses a rich communications system where, when user B changes his free text on his computer, all contacts who have subscribed to user B's social presence are notified by a presence server of the change of the free text.

US 2009/228 584 A1 discloses a system where a presence server can provide subscribed presence attributes to listeners by providing a notification of a change in a presence attribute to the listeners. The attribute may include information other than presence information.

### BRIEF DESCRIPTION OF THE INVENTION

An object of the present invention is thus to provide a method, system and a network apparatus for implementing the method so as to alleviate the above disadvantage. Objects of the invention are achieved by a method and an arrangement which are characterized by what is stated in the independent claims. Preferred embodiments of the invention are disclosed in the dependent claims.

The present solution is based on the idea of that, if it is detected in a network apparatus that presence data received from a user terminal comprises modified presence information related to the user terminal, the method comprises analysing the type of the modification. If it is detected based on the analysis that the presence data comprises a predetermined type of modified presence information, the method comprises indicating that the presence data received from the user terminal comprises value-added presence information related to the user terminal, in order to keep track of such presence status updates of the first user terminal that include value-added presence information in order the first user terminal to be charged for the presence status updates that include value-added presence information.

An advantage of the method and arrangement of the invention is that an optimized charging of the user for presence attributes related to the user terminal may be achieved.

### BRIEF DESCRIPTION OF THE DRAWINGS

In the following the invention will be described in greater detail by means of preferred embodiments with reference to the attached drawings, in which
Figure 1 illustrates a communications system according to a first exemplary embodiment;
Figure 2 illustrates a communications system according to a second exemplary embodiment;
Figure 3 is a signalling chart illustrating a method according to a first exemplary embodiment;
Figure 4 is a signalling chart illustrating a method according to a second exemplary embodiment;
Figure 5 is a flow chart illustrating the functioning of a network apparatus according to an exemplary embodiment.

### DETAILED DESCRIPTION OF THE INVENTION

The rich communication suite (RCS) is focused on the use of IMS (IP multimedia subsystem) for providing mobile phone communication services. Rich communication enables the use of more than just voice for communication. From the end-user point of view, RCS enables communication such as instant messaging, video sharing and/or buddy lists. These capabilities are available on any type of user devices using open communication between devices and networks. RCS may involve features such as an enhanced phonebook with service capabilities and presence enhanced contacts information, enhanced messaging which enables a large variety of messaging options including chat and messaging history, enriched call which enables multimedia content sharing during a voice call, and/or a "see what I see" capability. Wider and large scale IMS deployment, interoperability between different terminal vendor RCS clients, and RCS service interworking between operators are a part of RCS initiative. RCS leverages existing standards, taking on board different services defined by e.g. 3GPP and OMA and combines them with the enhanced phonebook. This allows the service capabilities as well as presence information of the different recipients to be shown in the terminal phonebook application. RCS reuses the capabilities of 3GPP specified IMS (IP multimedia subsystem) core system as the underlying service platform taking care of issues such as authentication, authorization, registration, charging and routing. The following services may be included in the RCS concept: presence, voice call, IM (instant messaging), video share, image share, SMS (short message service), MMS (multimedia messaging service). Some of the capabilities of RCS are also available from Internet service providers. Therefore, the present solution is not limited to the rich communication environment. Instead the present solution is applicable in any type of enhanced communication system. E.g. multimedia messaging service refers to a messaging service for sending and receiving multimedia messages. MMS combines conventional text messages with other ("richer") content types, such as photographs, images, voice clips, and video clips. MMS is used with multimedia terminals, e.g. WAP (wireless application protocol) clients, which can receive and process multimedia messages.

A presence service/enabler represents an integral part of most multimedia services, basically showing the user's availability and/or willingness for communication. A rich communication suite (RCS) is one example of a service utilizing presence. Presence has evolved quite a lot recently and may contain a plenty of information on the user, other than just the availability/willingness of the user. The present solution enables a network operator and/or a service operator to charge for presence information based on user-experienced value, instead of just for generic presence information.

Regarding a presence data model, an exemplary rich communication suite (RCS) document (i.e. an exemplary presence document) used for presence exchange may be as follows:

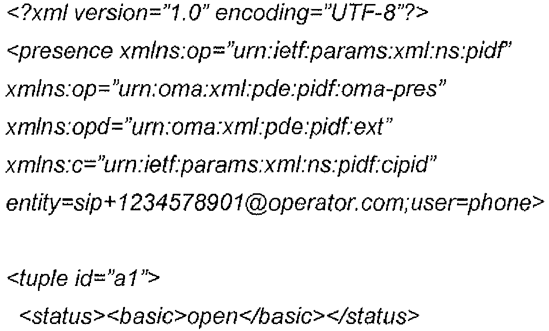

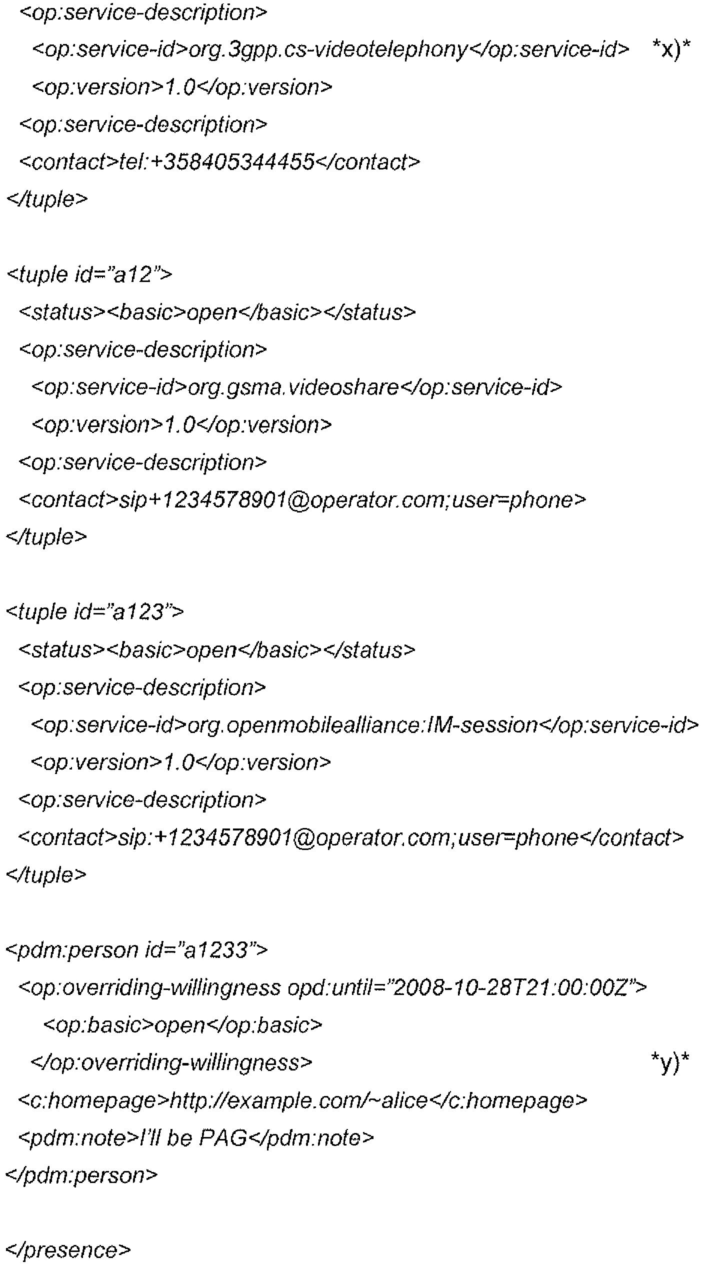

In the above example, it can be seen that a presence document may comprise information on multiple points; such as in point "x", a service is identified as possible to the other party (watcher). In point "y" it is possible to deliver information on the user's favourite website, deliver a short free text notation, or state that the user is hyper-available. According to the present solution, this type of information is part of the added value in a presence service and outside of "normal" presence exchange, and could thus be charged accordingly (i.e. more) by the operator. For example, the exchange of free text in <pdm:note>I'll be PAG</pdm:note> has certain SMS-like characteristics. When the presence status is updated the complete RCS presence document is sent every time regardless of how much of the information has actually changed.

The present solution may be implemented in an interconnecting network (such as IPX) or within a sending/terminating operator's network. The present solution may be used to analyze presence data in more detail than previously possible. The idea is to analyze each presence update and compare it with the previous one. That way changes made by the users may be tracked in more detail, and, for example, free text or a favourite link may be charged separately. The present solution also makes it possible to differentiate status updates (online/busy/offline) from other presence data which may also be considered to be a means for communication.

In an exemplary embodiment of the present solution, a "free text" presence attribute is used as an example of presence data that resembles SMS and may thus be charged differently compared to generic presence data.

The field/purpose of the present solution is related to multimedia services and especially to presence. Usage and purpose of the present solution is to enable/optimize charging aspects related to using presence in interworking networks, i.e. in interconnecting operator networks.

A problem that may be solved by using the present solution is that in current systems presence information can only be charged based on data volume, the number of messages, etc. This type of charging does not reflect the user experienced value, i.e. it is really not service-based. The present solution solves the problem by analyzing and comparing which kind of information has been changed in the presence information, and may thus be used to apply charging based on the value experienced by the user.

The present solution enables performing deeper analysis of presence information. Therefore, there may be extra requirements for the processing capabilities of the network components. Interworking agreements between operators may have to be more detailed in order to benefit from the present solution.

The best mode to implement the present solution is to carry out the implementation of the present solution in the interconnecting network (hubbing model) or in the sending/receiving operator's network.

Exemplary embodiments of the present solution will now be described more fully hereinafter with reference to the accompanying drawings, in which some, but not all embodiments of the solution are shown. Indeed, the solution may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present solution is applicable to any user terminal, server, corresponding component, and/or to any communication system or any combination of different communication systems that support services utilizing presence. The communication system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.

In the following, different embodiments will be described using as an example of a system architecture whereto the embodiments may be applied, an architecture based on an evolved UMTS terrestrial radio access network of an enhanced cellular network (E-UTRAN). Although E-UTRAN is discussed as a primary example herein, the present solution is not limited to E-UTRAN, LTE, and/or 3GPP systems. Thus, the present solution may also be applicable to other communications systems such as WiMAX (worldwide interoperability for microwave access), HSDPA (high-speed downlink packet access), HSUPA (high-speed uplink packet access), and/or WLAN (wireless local area network).

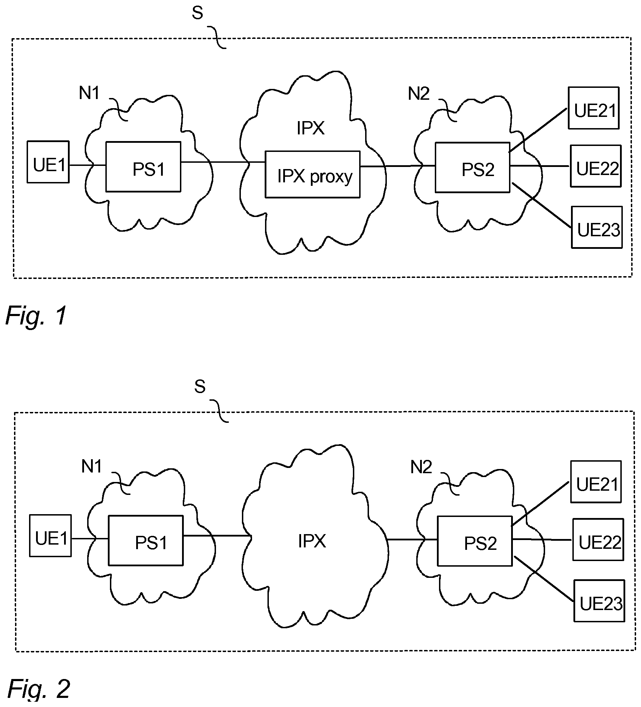

A general architecture of a communication system according to exemplary embodiments of the present solution is illustrated in Figures 1 and 2. Figures 1 and 2 are simplified system architectures only showing some elements and functional entities, all being logical units whose implementation may differ from what is shown. The connections shown in Figures 1 and 2 are logical connections; the actual physical connections may be different. It is apparent to a person skilled in the art that the systems also comprise other functions and structures. It should be appreciated that the functions, structures, elements and the protocols used in or for group communication, are irrelevant to the actual invention. Therefore, they need not to be discussed in more detail here.

Figure 1 provides an example of an environment where the present solution may be used. Referring to Figure 1, a communications system S according to a first exemplary embodiment of the present solution comprises a user equipment UE1, UE21, UE22, UE23 that may be e.g. a mobile or wireless user terminal, such as a mobile phone (mobile station), a personal digital assistant (PDA), a game console, a smart phone, a personal computer (PC), a laptop, a desktop computer or the like, capable of providing presence data. The system S further comprises a core network element PS1, PS2, IPX proxy, such as presence server or an IPX proxy server or any other core network element capable of handling presence data. The presence server PS1 of a first operator network N1 is operatively connected to the presence server PS2 of a second operator network N2 via the IPX proxy server of an interconnecting network IPX. In the example shown in Figure 1, the first user terminal UE1 belongs to a first user and is capable of connecting to the first operator network N1, and the second user terminal UE21, UE22, UE23 ("watcher") belongs to a second user and is capable of connecting to the second operator network N2.

Figure 2 provides another example of an environment where the present solution may be used. Referring to Figure 2, a communications system S according to a second exemplary embodiment of the present solution comprises a user equipment UE1, UE21, UE22, UE23 that may be e.g. a mobile or wireless user terminal, such as a mobile phone (mobile station), a personal digital assistant (PDA), a game console, a smart phone, a personal computer (PC), a laptop, a desktop computer or the like, capable of providing presence data. The system S further comprises a core network element PS1, PS2, such as presence server or any other core network element capable of handling presence data. The presence server PS1 of a first operator network N1 is operatively connected to the presence server PS2 of a second operator network N2 via an interconnecting network IPX. In the example shown in Figure 1, the user terminal UE1 belongs to a first user and is capable of connecting to the first operator network N1, and the user terminal UE21, UE22, UE23 belongs to a second user and is capable of connecting to the second operator network N2.

Figures 1 and 2 show a simplified version of an evolved UMTS (universal mobile telecommunications system) terrestrial radio access network structure, which only illustrates the components that are essential to illustrate the present solution, even though those skilled in the art naturally know that a general communications system also comprises other functions and structures, which do not have to be described in more detail herein. The network element PS1, PS2, IPX proxy may include any network element operated by a network operator in a cellular, wireless and/or fixed network, such as a mobile switching centre, SGSN, GGSN, VLR, HLR, HSS, base station, access point, radio network controller, database, and/or a network computer or server. Although each network element UE1, PS1, N1, IPX, IPX proxy, PS2, N2, UE21, UE22, UE23 has been depicted as one entity, different modules and memory may be implemented in one or more physical or logical entities. A general architecture of a communication system providing presence-based communication is illustrated in Figures 1 and 2. Figures 1 and 2 are simplified system architectures only showing some elements and functional entities, all being logical units whose implementation may differ from what is shown. The connections shown in Figures 1 and 2 are logical connections; the actual physical connections may be different. It is apparent to a person skilled in the art that the systems also comprise other functions and structures. It should be appreciated that the functions, structures, elements and the protocols used in or for session-based communication are irrelevant to the actual invention. Therefore, they need not be discussed in more detail here.

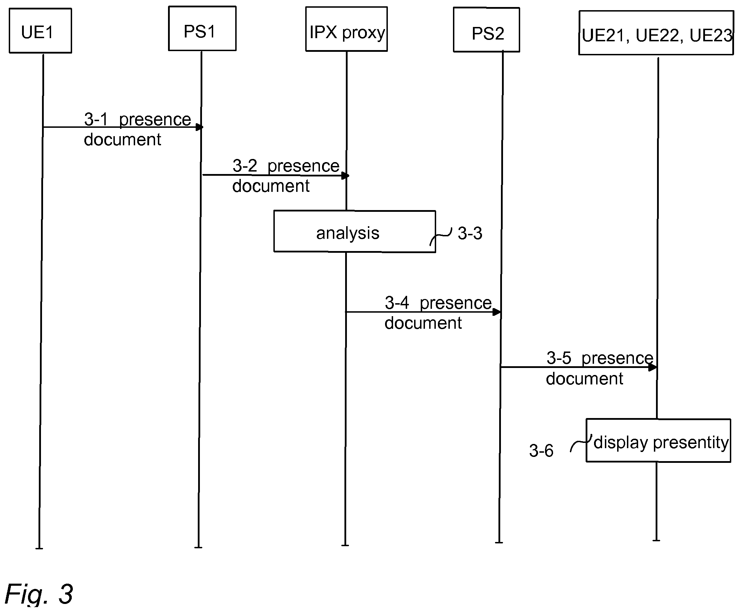

Figure 3 illustrates signalling between network elements according to a first exemplary embodiment of the present solution. Referring to Figure 3, a first user terminal UE1 provides presence information related to the first user terminal by transmitting a presence document in a message 3-1, 3-2 via a first presence server PS1 of a first operator network N1 to an IPX proxy server IPX proxy. The presence document may include (generic) presence information related to the first user terminal UE1 of a first user. The presence document may also include a free text presence attribute (e.g. "Dinner today, anyone?") added by the first user to an appropriate free text field. In step 3-3, the presence document is received in IPX proxy. Further, in step 3-3, IPX proxy checks the presence document, and determines, on the basis of the presence information, whether or not the presence document comprises modified presence information related to the first user terminal UE1. If IPX proxy detects 3-3 that the presence document comprises modified presence information related to the first user terminal UE1, IPX proxy is configured to analyse 3-3 the type of the modification. The analysing may be carried out e.g. by comparing the received presence information related to the first user terminal UE1, with previously stored presence information related to the first user terminal UE1. If it is detected based on the analysis of step 3-3 that the presence document comprises a predetermined type of modified presence information (e.g. the presence data comprises a user-added free text presence attribute related to the first user terminal UE1, and/or the presence information has been updated at least a predetermined number of times within a predetermined time period (for example, more than three times per day)), IPX proxy is configured to indicate 3-3 that the presence data received from the first user terminal UE1 comprises value-added presence information related to the first user terminal UE1. The indicating may comprise e.g. storing information on the value-added presence information related to the first user terminal UE1, and/or transmitting (not shown in Figure 1) information on the value-added presence information related to the first user terminal UE1 to a further network apparatus (e.g. an operator charging function) for value-added user charging purposes according to the present solution. In a message 3-4, 3-5 the presence document is transmitted from IPX proxy via a second presence server PS2 of a second operator network N2 to a second user terminal UE21, UE22, UE23. In step 3-6 the presence document is received in the second user terminal UE21, UE22, UE23, wherein the presentity of the first user terminal (or the first user) may be displayed 3-6 by the second user terminal UE21, UE22, UE23 to the user of the second user terminal UE21, UE22, UE23.

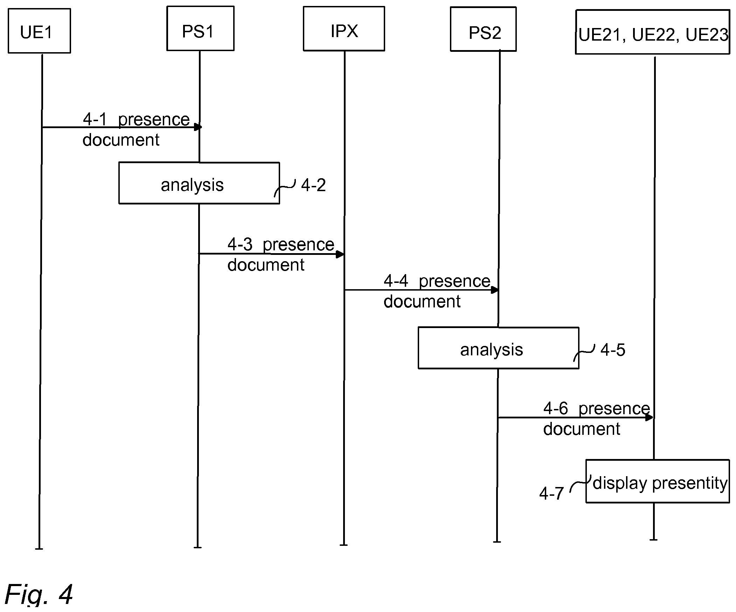

Figure 4 illustrates signalling between network elements according to a second exemplary embodiment of the present solution. Referring to Figure 4, a first user terminal UE1 provides presence information related to the first user terminal by transmitting a presence document in a message 4-1 to a first presence server PS1 of a first operator network N1. The presence document may include (generic) presence information related to the first user terminal UE1 of a first user. The presence document may also include a free text presence attribute (e.g. "Dinner today, anyone?") added by the first user to an appropriate free text field. In step 4-2, the presence document is received in PS1. Further, in step 4-2, PS1 checks the presence document, and determines, on the basis of the presence information, whether or not the presence document comprises modified presence information related to the first user terminal UE1. If PS1 detects 4-2 that the presence document comprises modified presence information related to the first user terminal UE1, PS1 is configured to analyse 4-2 the type of the modification. The analysing may be carried out e.g. by comparing the received presence information related to the first user terminal UE1, with previously stored presence information related to the first user terminal UE1. If it is detected based on the analysis of step 4-2 that the presence document comprises a predetermined type of modified presence information (e.g. the presence data comprises a user-added free text presence attribute related to the first user terminal UE1, and/or the presence information has been updated at least a predetermined number of times within a predetermined time period (more than three times per day)), IPX proxy is configured to indicate 4-2 that the presence data received from the first user terminal UE1 comprises value-added presence information related to the first user terminal UE1. The indicating may comprise e.g. storing information on the value-added presence information related to the first user terminal UE1, and/or transmitting (not shown in Figure 2) information on the value-added presence information related to the first user terminal UE1 to a further network apparatus (e.g. an operator charging function) for value-added user charging purposes according to the present solution. In a message 4-3, 4-4, 4-6 the presence document is transmitted via IPX proxy and a second presence server PS2 of a second operator network N2 to a second user terminal UE21, UE22, UE23. In step 4-7 the presence document is received in the second user terminal UE21, UE22, UE23, wherein the presentity of the first user terminal (or the first user) may be displayed 4-7 by the second user terminal UE21, UE22, UE23 to the user of the second user terminal UE21, UE22, UE23.

Another option is that the checking/analysing/storing/transmitting step as described above in step 4-2 is instead performed in step 4-5 in the second presence server PS2 of the second operator network N2. Yet another option is that the checking/analysing/storing/transmitting step as described above in step 4-2 is performed both in step 4-2 in the first presence server PS1 of the first operator network N1 and in step 4-5 in the second presence server PS2 of the second operator network N2.

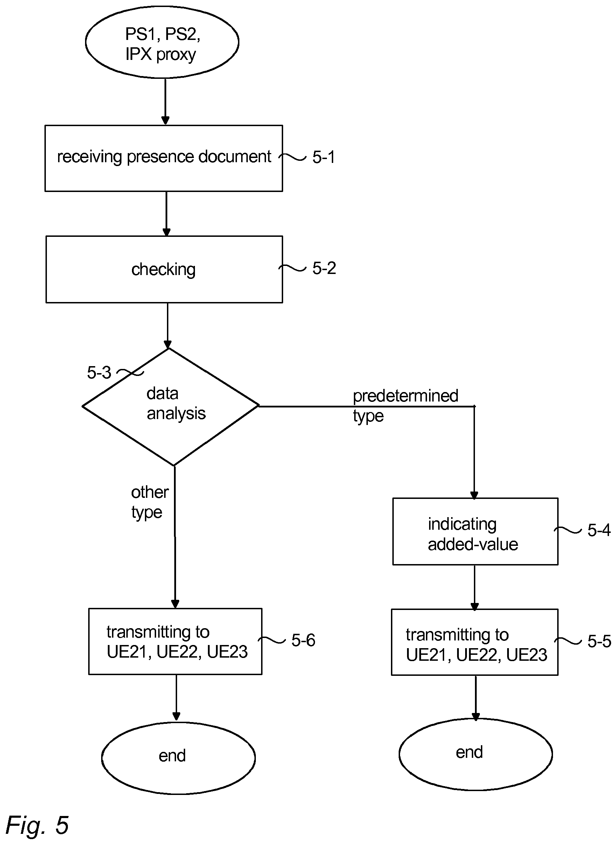

Figure 5 illustrates the operation of a network apparatus according to an exemplary embodiment of the present solution. Referring to Figure 5, the network apparatus (which may be e.g. an IPX proxy server IPX server of an interconnecting network IPX, a first presence server PS1 of a first network N1 where the first user terminal UE 1 is located, and/or a second presence server (PS2 of a second network N2 where a second ("watcher") user terminal UE22, UE23, UE24 is located) receives 5-1 a presence document from a first user terminal UE1 that e.g. wishes the first user's presence information to be available to a second user terminal UE22, UE23, UE24. The presence document may include (generic) presence information related to the first user terminal UE. The presence document may also include a free text presence attribute (e.g. "Dinner today, anyone?") added by the first user to an appropriate free text field. In step 5-2, the network apparatus PS1, IPX server, PS2 checks the presence document, and determines, on the basis of the presence information, whether or not the presence document comprises modified presence information related to the first user terminal UE1. If IPX proxy detects 5-2 that the presence document comprises modified presence information related to the first user terminal UE1, the network apparatus is configured to analyse 5-3 the type of the modification. The analysing may be carried out e.g. by comparing the received presence information related to the first user terminal UE1, with previously stored presence information related to the first user terminal UE1. If it is detected based on the analysis of step 5-3 that the presence document comprises a predetermined type of modified presence information (e.g. the presence data comprises a user-added free text presence attribute related to the first user terminal UE1, and/or the presence information has been updated at least a predetermined number of times within a predetermined time period (e.g. more than three times per day)), the network apparatus is configured to indicate 5-4 that the presence data received from the first user terminal UE1 comprises value-added presence information related to the first user terminal UE1. The indicating may comprise e.g. storing information on the value-added presence information related to the first user terminal UE1, and/or transmitting 5-4 information on the value-added presence information related to the first user terminal UE1 to a further network apparatus (e.g. an operator charging function) for value-added user charging purposes according to the present solution. In step 5-5 the presence document is transmitted from network apparatus towards a second user terminal UE21, UE22, UE23. If it is detected based on the analysis of step 5-3 that the presence document only comprises other than a predetermined type of modified presence information (e.g. the presence data does not comprise a user-added free text presence attribute related to the first user terminal UE1, and/or the presence information has not been updated at least a predetermined number of times within a predetermined time period (e.g. more than three times per day)), the network apparatus is configured to transmit 5-6 the presence document towards a second user terminal UE21, UE22, UE23.

The steps/points, signaling messages and related functions described above in Figures 1 to 5 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The operations to be executed illustrate a procedure that may be implemented in one or more physical or logical entities. The signaling messages are only exemplary and may even comprise several separate messages for transmitting the same information. In addition, the messages may also contain other information.

The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

User terminal (user equipment) may refer to any user communication device. A term "user equipment" as used herein may refer to any device having a communication capability, such as a wireless mobile terminal, a PDA, a smart phone, a personal computer (PC), a laptop computer, a desktop computer, etc. For example, the wireless communication terminal may be an UMTS or GSM/EDGE smart mobile terminal. Thus, the application capabilities of the device according to various embodiments of the invention may include native applications available in the terminal, or subsequently installed applications. The network apparatus may be implemented in any network element, such as a server.

An apparatus capable of performing operation according to various embodiments of the present solution may refer to any communication entity, such as the network apparatus, database or the user terminal. The apparatus may generally include a processor, controller, or the like connected to or comprising a memory. The memory may include volatile and/or non-volatile memory and typically stores content, data, or the like. For example, the memory may store computer program code such as software applications or operating systems, information, data, content, or the like for a processor to perform steps associated with operation of the entity in accordance with embodiments of the present invention. Also, for example, the memory typically stores content transmitted from, or received by, the apparatus. Memory may be, for example, random access memory (RAM), a hard drive, or other fixed data memory or storage device. The processor may receive input from an input device and may display information on a display. The processor may also be connected to at least one communication interface or other means for transmitting and/or receiving data, content, messages, or the like. Where the apparatus provides wireless communication, such as in a UMTS, GSM, EDGE, WCDMA network, Bluetooth network, a wireless LAN network, or other mobile network, the processor may operate with a wireless communication subsystem of the interface. Where the apparatus provides an IP server with IP communication, the processor may operate with an IP communication system of the interface. One or more processors, memory, storage devices, and other computer elements may be used in common by a computer system and subsystems, as part of the same platform, or processors may be distributed between a computer system and subsystems, as parts of multiple platforms. If the apparatus is, for example, a mobile station or a network server, the apparatus may also include modules such as a messaging service client/server and/or an application associated with the processor. These modules may be software and/or software-hardware components. For example, a messaging service client/server may include software capable of establishing, modifying, and terminating messaging sessions, to send and receive messages, etc. The apparatus may generally include a processor, controller, control unit or the like connected to a memory and to various interfaces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment. An interface provides a transmitter and/or a receiver or a corresponding means for receiving and/or transmitting data, content, messages including the above described advertisements, responses and solicitation messages.

At least some embodiments or aspects described herein may be implemented using programming stored within an appropriate storage circuitry described above or communicated via a network or other transmission media and configured to control appropriate processing circuitry. For example, programming may be provided via appropriate media including, for example, embodied within articles of manufacture, embodied within a data signal (e.g., modulated carrier wave, data packets, digital representations, etc.) communicated via an appropriate transmission medium, such as a communication network (e.g., the Internet or a private network), wired electrical connection, optical connection or electromagnetic energy, for example, via communications interface, or provided using other appropriate communication structure or medium. Exemplary programming including processor-usable code may be communicated as a data signal embodied in a carrier wave in but one example.

It will be obvious to a person skilled in the art that, as the technology advances, the inventive concept can be implemented in various ways. The invention and its embodiments are not limited to the examples described above but may vary within the scope of the claims.

## Claims

1. A method for providing an enhanced communication service in a communications system (S), the system (S) comprising a network apparatus (PS1, IPX proxy, PS2) capable of managing presence information related to a first user terminal (UE1), wherein if it is detected, in the network apparatus (PS1, IPX proxy, PS2), that presence data received from a first user terminal (UE1) comprises modified presence information related to the first user terminal (UE1), the method comprises
analysing, in the network apparatus (PS1, IPX proxy, PS2), the type of the modification, wherein, if it is detected that the presence data comprises a predetermined type of modified presence information, the method comprises
indicating, in the network apparatus (PS1, IPX proxy, PS2), that the presence data received from the first user terminal (UE1) comprises value-added presence information related to the first user terminal (UE1), in order to keep track in more detail of such presence status updates of the first user terminal that include value-added presence information in order the first user terminal to be charged separately for the presence status updates that include value-added presence information.

2. A method according to claim 1, **characterized in that** said analysing comprises
checking whether the presence data comprises a user-added free text presence attribute related to the first user terminal (UE1), wherein, if it is detected that the presence data comprises a free text presence attribute related to the first user terminal (UE1), the method comprises
indicating that the presence data comprises value-added presence information related to the first user terminal (UE1).

3. A method according to claim 1 or 2, **characterized in that** said analysing comprises
checking whether the presence information related to the first user terminal (UE1) has been updated at least a predetermined number of times within a predetermined time period, wherein, if it is detected that the presence information has been updated at least a predetermined number of times within a predetermined time period, the method comprises
indicating that the presence data comprises value-added presence information related to the first user terminal (UE1).

4. A method according to claim 1, 2 or 3, **characterized in that** the analysing is carried out by comparing the received presence information related to the first user terminal (UE1), with previously stored presence information related to the first user terminal (UE1).

5. A method as claimed in any one of claims 1 to 4, **characterized in that** said indicating comprises storing information on the value-added presence information related to the first user terminal (UE1) for value-added user charging purposes.

6. A method as claimed in any one of claims 1 to 5, **characterized in that** said indicating comprises transmitting information on the value-added presence information related to the first user terminal (UE1) to a further network apparatus for value-added user charging purposes.

7. A method as claimed in any one of claims 1 to 6, **characterized in that** the method comprises optimizing the charging of user by charging the user for transmitting presence information other than generic and/or non-updated presence information.

8. A method as claimed in any one of claims 1 to 7, **characterized in that** the presence data comprises the presence status of the user of the first user terminal regarding multimedia messaging, sending photographs, sending images, voice clip, video clip, instant messaging, video sharing, buddy lists, enhanced phonebook, chat, messaging history, enriched call, and/or a see what I see capability.

9. A communications system (S) comprising a network apparatus (PS1, IPX proxy, PS2) capable of managing presence information related to a first user terminal (UE1), wherein in response to detecting, in the network apparatus (PS1, IPX proxy, PS2), that presence data received from a first user terminal (UE1) comprises modified presence information related to the first user terminal (UE1), the system is configured to
analyse the type of the modification, wherein, in response to detecting that the presence data comprises a predetermined type of modified presence information, the system is configured to
indicate that the presence data received from the first user terminal (UE1) comprises value-added presence information related to the first user terminal (UE1), in order to keep track in more detail of such presence status updates of the first user terminal that in-clude value-added presence information in order the first user terminal to be charged separately for the presence status updates that include value-added presence information.

10. A system according to claim 9, **characterized in that** it is configured to
check whether the presence data comprises a user-added free text presence attribute related to the first user terminal (UE1), wherein, if it is detected that the presence data comprises a free text presence attribute related to the first user terminal (UE1), the system is configured to
indicate that the presence data comprises value-added presence information related to the first user terminal (UE1).

11. A system according to claim 9 or 10, **characterized in that** it is configured to
check whether the presence information related to the first user terminal (UE1) has been updated at least a predetermined number of times within a predetermined time period, wherein, if it is detected that the presence information has been updated at least a predetermined number of times within a predetermined time period, the system is configured to
indicate that the presence data comprises value-added presence information related to the first user terminal (UE1).

12. A system as claimed in claim 9, 10 to 11, **characterized in that** the system is configured to store information on the value-added presence information related to the first user terminal (UE1) for value-added user charging purposes.

13. A system as claimed in any one of claims 9 to 12, **characterized in that** the system is configured to transmit information on the value-added presence information related to the first user terminal (UE1) to a further network apparatus for value-added user charging purposes.

14. A network apparatus (PS1, IPX proxy, PS2) for a communications system (S), wherein the network apparatus (PS1, IPX proxy, PS2) is capable of managing presence information related to a first user terminal (UE1), wherein in response to detecting that presence data received from a first user terminal (UE1) comprises modified presence information related to the first user terminal (UE1), the network apparatus (PS1, IPX proxy, PS2) is configured to
analyse the type of the modification, wherein, in response to detecting that the presence data comprises a predetermined type of modified presence information, the network apparatus (PS1, IPX proxy, PS2) is configured to
indicate that the presence data received from the first user terminal (UE1) comprises value-added presence information related to the first user terminal (UE1), in order to keep track in more detail of such presence status updates of the first user terminal that in-clude value-added presence information in order the first user terminal to be charged separately for the presence status updates that include value-added presence information.

15. A network apparatus according to claim 14, **characterized in that** it is configured to
check whether the presence data comprises a user-added free text presence attribute related to the first user terminal (UE1), wherein, if it is detected that the presence data comprises a free text presence attribute related to the first user terminal (UE1), the network apparatus is configured to
indicate that the presence data comprises value-added presence information related to the first user terminal (UE1).

16. A network apparatus according to claim 14 or 15, **characterized in that** it is configured to
check whether the presence information related to the first user terminal (UE1) has been updated at least a predetermined number of times within a predetermined time period, wherein, if it is detected that the presence information has been updated at least a predetermined number of times within a predetermined time period, the network apparatus is configured to
indicate that the presence data comprises value-added presence information related to the first user terminal (UE1).

17. A network apparatus according to claim 14, 15 or 16, **characterized in that** it is configured to carry out the analysing by comparing the received presence information related to the first user terminal (UE1), with previously stored presence information related to the first user terminal (UE1).

18. A network apparatus as claimed in any one of claims 14 to 17, **characterized in that** it is configured to store information on the value-added presence information related to the first user terminal (UE1) for value-added user charging purposes.

19. A network apparatus as claimed in any one of claims 14 to 18, **characterized in that** it is configured to transmit information on the value-added presence information related to the first user terminal (UE1) to a further network apparatus for value-added user charging purposes.

20. A network apparatus as claimed in any one of claims 14 to 19, **characterized in that** it is configured to optimize the charging of user by charging the user for transmitting presence information other than generic and/or non-updated presence information.

21. A network apparatus as claimed in any one of claims 14 to 20, **characterized in that** it comprises an IPX proxy server (IPX server) of an interconnecting network (IPX), a first presence server (PS1) of a first network (N1) where the first user terminal is located, and/or a second presence server (PS2) of a second network (N2) where a watcher user terminal is located.

## Patentansprüche

1. Verfahren für die Bereitstellung eines verbesserten Kommunikationsdienstes in einem Kommunikationssystem (S), wobei das System (S) eine Netzwerkvorrichtung (PS1, IPX Proxy, PS2) umfasst, die Präsenzinformationen im Zusammenhang mit einer ersten Benutzerstation (UE1) verwalten kann, wobei das Verfahren, wenn in der Netzwerkvorrichtung (PS1, IPX Proxy, PS2) erkannt wird, dass Präsenzdaten, die von einer ersten Benutzerstation (UE1) empfangen wurden, geänderte Präsenzinformationen im Zusammenhang mit der ersten Benutzerstation (UE1) umfassen, Folgendes umfasst:
Analysieren in der Netzwerkvorrichtung (PS1, IPX Proxy, PS2) der Art der Änderung, wobei das Verfahren, wenn erkannt wird, dass die Präsenzdaten eine vorbestimmte Art von geänderten Präsenzinformationen umfassen, umfasst:
Anzeigen in der Netzwerkvorrichtung (PS1, IPX Proxy, PS2), dass die von der ersten Benutzerstation (UE1) empfangenen Präsenzdaten Mehrwert-Präsenzinformationen im Zusammenhang mit der ersten Benutzerstation (UE1) umfassen, um derartige Aktualisierungen des Präsenzstatus der ersten Benutzerstation detaillierter zu verfolgen, die Mehrwert-Präsenzinformationen enthalten, damit die erste Benutzerstation für die Aktualisierungen des Präsenzstatus, die Mehrwert-Präsenzinformationen enthalten, separat belastet wird.

2. Verfahren nach Anspruch 1, **dadurch gekennzeichnet, dass** das Analysieren umfasst
Prüfen, ob die Präsenzdaten ein vom Benutzer hinzugefügtes Freitext-Präsenzattribut im Zusammenhang mit der ersten Benutzerstation (UE1) umfassen, wobei das Verfahren, wenn erkannt wird, dass die Präsenzdaten ein Freitext-Präsenzattribut im Zusammenhang mit der ersten Benutzerstation (UE1) umfassen, umfasst:
Anzeigen, dass die Präsenzdaten Mehrwert-Präsenzinformationen im Zusammenhang mit der ersten Benutzerstation (UE1) umfassen.

3. Verfahren nach Anspruch 1 oder 2, **dadurch gekennzeichnet, dass** das Analysieren umfasst:
Prüfen, ob die Präsenzinformationen im Zusammenhang mit der ersten Benutzerstation (UE1) zumindest eine vorbestimmte Anzahl von Malen innerhalb einer vorbestimmten Zeitspanne aktualisiert worden sind, wobei das Verfahren, wenn erkannt wird, dass die Präsenzinformationen mindestens eine vorbestimmte Anzahl von Malen innerhalb einer vorbestimmten Zeitspanne aktualisiert wurden, umfasst:
Anzeigen, dass die Präsenzdaten Mehrwert-Präsenzinformationen im Zusammenhang mit der ersten Benutzerstation (UE1) umfassen.

4. Verfahren nach Anspruch 1, 2 oder 3, **dadurch gekennzeichnet, dass** das Analysieren ausgeführt wird durch den Vergleich der empfangenen Präsenzinformationen im Zusammenhang mit der ersten Benutzerstation (UE1) mit zuvor gespeicherten Präsenzinformationen im Zusammenhang mit der ersten Benutzerstation (UE1).

5. Verfahren nach einem der Ansprüche 1 bis 4, **dadurch gekennzeichnet, dass** das Anzeigen das Speichern von Informationen über die Mehrwert-Präsenzinformationen im Zusammenhang mit der ersten Benutzerstation (UE1) für Zwecke der Belastung des Benutzers für Mehrwert umfasst.

6. Verfahren nach einem des Anspruch 1 bis 5, **dadurch gekennzeichnet, dass** das Anzeigen das Übermitteln von Informationen über die Mehrwert-Präsenzinformationen im Zusammenhang mit der ersten Benutzerstation (UE1) zu einer weiteren Netzwerkvorrichtung für Zwecke der Belastung des Benutzers für Mehrwert umfasst.

7. Verfahren nach einem der Ansprüche 1 bis 6, **dadurch gekennzeichnet, dass** das Verfahren das Optimieren der Belastung des Benutzers durch Belasten des Benutzers für das Übermitteln von anderen Präsenzinformationen als allgemeinen und/oder nicht aktualisierten Präsenzinformationen umfasst.

8. Verfahren nach einem der Ansprüche 1 bis 7, **dadurch gekennzeichnet, dass** die Präsenzdaten den Präsenzstatus des Benutzers der ersten Benutzerstation bezüglich Multimedia-Nachrichtenversand, Senden von Fotos, Senden von Bildern, Audioclips, Videoclips, Instant Messaging, Video-Sharing, Buddy-Listen, erweitertem Telefonbuch, Chat, Nachrichtenverlauf, erweitertem Anruf und/oder einer Fähigkeit zu sehen, was ich sehe, umfasst.

9. Kommunikationssystem (S) mit einer Netzwerkvorrichtung (PS1, IPX Proxy, PS2), das Präsenzinformationen im Zusammenhang mit einer ersten Benutzerstation (UE1) verwalten kann, wobei das System als Reaktion auf das Erkennen in der Netzwerkvorrichtung (PS1, IPX Proxy, PS2), dass Präsenzdaten, die von einer ersten Benutzerstation (UE1) empfangen wurden, geänderte Präsenzinformationen im Zusammenhang mit der ersten Benutzerstation (UE1) umfassen, dafür konfiguriert ist,
die Art der Änderung zu analysieren, wobei das System, als Reaktion auf das Erkennen, dass die Präsenzdaten eine vorbestimmte Art von geänderten Präsenzinformationen umfassen, dafür konfiguriert ist,
anzuzeigen, dass die von der ersten Benutzerstation (UE1) empfangenen Präsenzdaten Mehrwert-Präsenzinformationen im Zusammenhang mit der ersten Benutzerstation (UE1) umfassen, um derartige Aktualisierungen des Präsenzstatus der ersten Benutzerstation detaillierter zu verfolgen, die Mehrwert-Präsenzinformationen enthalten, damit die erste Benutzerstation für die Aktualisierungen des Präsenzstatus, die Mehrwert-Präsenzinformationen enthalten, separat belastet wird.

10. System nach Anspruch 9, **dadurch gekennzeichnet, dass** es dafür konfiguriert ist,
zu prüfen, ob die Präsenzdaten ein vom Benutzer hinzugefügtes Freitext-Präsenzattribut im Zusammenhang mit der ersten Benutzerstation (UE1) umfassen, wobei das System, wenn erkannt wird, dass die Präsenzdaten ein Freitext-Präsenzattribut im Zusammenhang mit der ersten Benutzerstation (UE1) umfassen, dafür konfiguriert ist,
anzuzeigen, dass die Präsenzdaten Mehrwert-Präsenzinformationen im Zusammenhang mit der ersten Benutzerstation (UE1) umfassen.

11. System nach Anspruch 9 oder 10, **dadurch gekennzeichnet, dass** es dafür konfiguriert ist,
zu prüfen, ob die Präsenzinformationen im Zusammenhang mit der ersten Benutzerstation (UE1) zumindest eine vorbestimmte Anzahl von Malen innerhalb einer vorbestimmten Zeitspanne aktualisiert worden sind, wobei das System, wenn erkannt wird, dass die Präsenzinformationen mindestens eine vorbestimmte Anzahl von Malen innerhalb einer vorbestimmten Zeitspanne aktualisiert wurden, dafür konfiguriert ist,
anzuzeigen, dass die Präsenzdaten Mehrwert-Präsenzinformationen im Zusammenhang mit der ersten Benutzerstation (UE1) umfassen.

12. System nach einem der Ansprüche 9, 10 bis 11, **dadurch gekennzeichnet, dass** das System dafür konfiguriert ist, Informationen über die Mehrwert-Präsenzinformationen im Zusammenhang mit der ersten Benutzerstation (UE1) für Zwecke der Belastung des Benutzers für Mehrwert zu speichern.

13. System nach einem der Ansprüche 9 bis 12, **dadurch gekennzeichnet, dass** das System dafür konfiguriert ist, Informationen über die Mehrwert-Präsenzinformationen im Zusammenhang mit der ersten Benutzerstation (UE1) für Zwecke der Belastung des Benutzers für Mehrwert zu einer weiteren Netzwerkvorrichtung zu übermitteln.

14. Netzwerkvorrichtung (PS1, IPX Proxy, PS2) für ein Kommunikationssystem (S), wobei die Netzwerkvorrichtung (PS1, IPX Proxy, PS2) Präsenzinformationen im Zusammenhang mit einer ersten Benutzerstation (UE1) verwalten kann, wobei die Netzwerkvorrichtung (PS1, IPX Proxy, PS2), als Reaktion auf das Erkennen, dass von einer ersten Benutzerstation (UE1) empfangene Präsenzdaten geänderte Präsenzinformationen im Zusammenhang mit der ersten Benutzerstation (UE1) umfassen, dafür konfiguriert ist,
die Art der Änderung zu analysieren, wobei die Netzwerkvorrichtung (PS1, IPX Proxy, PS2), als Reaktion auf das Erkennen, dass die Präsenzdaten eine vorbestimmte Art von geänderten Präsenzinformationen umfassen, dafür konfiguriert ist,
anzuzeigen, dass die von der ersten Benutzerstation (UE1) empfangenen Präsenzdaten Mehrwert-Präsenzinformationen im Zusammenhang mit der ersten Benutzerstation (UE1) umfassen, um derartige Aktualisierungen des Präsenzstatus der ersten Benutzerstation detaillierter zu verfolgen, die Mehrwert-Präsenzinformationen enthalten, damit die erste Benutzerstation für die Aktualisierungen des Präsenzstatus, die Mehrwert-Präsenzinformationen enthalten, separat belastet wird.

15. Netzwerkvorrichtung nach Anspruch 14, **dadurch gekennzeichnet, dass** sie dafür konfiguriert ist,
zu prüfen, ob die Präsenzdaten ein vom Benutzer hinzugefügtes Freitext-Präsenzattribut im Zusammenhang mit der ersten Benutzerstation (UE1) umfassen, wobei die Netzwerkvorrichtung, wenn erkannt wird, dass die Präsenzdaten ein Freitext-Präsenzattribut im Zusammenhang mit der ersten Benutzerstation (UE1) umfassen, dafür konfiguriert ist,
anzuzeigen, dass die Präsenzdaten Mehrwert-Präsenzinformationen im Zusammenhang mit der ersten Benutzerstation (UE1) umfassen.

16. Netzwerkvorrichtung nach Anspruch 14 oder 15, **dadurch gekennzeichnet, dass** sie dafür konfiguriert ist,
zu prüfen, ob die Präsenzinformationen im Zusammenhang mit der ersten Benutzerstation (UE1) zumindest eine vorbestimmte Anzahl von Malen innerhalb einer vorbestimmten Zeitspanne aktualisiert worden sind, wobei die Netzwerkvorrichtung, wenn erkannt wird, dass die Präsenzinformationen mindestens eine vorbestimmte Anzahl von Malen innerhalb einer vorbestimmten Zeitspanne aktualisiert wurden, dafür konfiguriert ist,
anzuzeigen, dass die Präsenzdaten Mehrwert-Präsenzinformationen im Zusammenhang mit der ersten Benutzerstation (UE1) umfassen.

17. Netzwerkvorrichtung nach Anspruch 14, 15 oder 16, **dadurch gekennzeichnet, dass** sie dafür konfiguriert ist, das Analysieren auszuführen durch den Vergleich der empfangenen Präsenzinformationen im Zusammenhang mit der ersten Benutzerstation (UE1) mit zuvor gespeicherten Präsenzinformationen im Zusammenhang mit der ersten Benutzerstation (UE1).

18. Netzwerkvorrichtung nach einem der Ansprüche 14 bis 17, **dadurch gekennzeichnet, dass** sie dafür konfiguriert ist, Informationen über die Mehrwert-Präsenzinformationen im Zusammenhang mit der ersten Benutzerstation (UE1) für Zwecke der Belastung des Benutzers für Mehrwert zu speichern.

19. Netzwerkvorrichtung nach einem der Ansprüche 14 bis 18, **dadurch gekennzeichnet, dass** sie dafür konfiguriert ist, Informationen über die Mehrwert-Präsenzinformationen im Zusammenhang mit der ersten Benutzerstation (UE1) für Zwecke der Belastung des Benutzers für Mehrwert zu speichern.

20. Netzwerkvorrichtung nach einem der Ansprüche 14 bis 19, **dadurch gekennzeichnet, dass** sie dafür konfiguriert ist, die Belastung des Benutzers durch Belasten des Benutzers für das Übermitteln von anderen Präsenzinformationen als allgemeinen und/oder nicht aktualisierten Präsenzinformationen zu optimieren.

21. Netzwerkvorrichtung nach einem der Ansprüche 14 bis 20, **dadurch gekennzeichnet, dass** sie einen IPX-Proxy-Server (IPX-Server) eines untereinander verbindenden Netzwerks (IPX), einen ersten Präsenzserver (PS1) eines ersten Netzwerks (N1), in dem sich die erste Benutzerstation befindet, und/oder einen zweiten Präsenzserver (PS2) eines zweiten Netzwerks (N2) umfasst, in dem sich eine Beobachter-Benutzerstation befindet.

## Revendications

1. Procédé pour fournir un service de communication amélioré dans un système de communications (S), le système (S) comprenant un appareil de réseau (PS1, proxy IPX, PS2) capable de gérer des informations de présence liées à un premier terminal d'utilisateur (UE1), dans lequel s'il est détecté, dans l'appareil de réseau (PS1, proxy IPX, PS2), que des données de présence reçues d'un premier terminal d'utilisateur (UE1) comprennent des informations de présence modifiées liées au premier terminal d'utilisateur (UE1), le procédé comprend
l'analyse, dans l'appareil de réseau (PS1, proxy IPX, PS2), du type de la modification, où, s'il est détecté que les données de présence comprennent un type prédéterminé d'informations de présence modifiées, le procédé comprend
l'indication, dans l'appareil de réseau (PS1, proxy IPX, PS2), que les données de présence reçues du premier terminal d'utilisateur (UE1) comprennent des informations de présence à valeur ajoutée liées au premier terminal d'utilisateur (UE1), afin de suivre plus en détail de telles mises à jour de statut de présence du premier terminal d'utilisateur qui incluent des informations de présence à valeur ajoutée afin que le premier terminal d'utilisateur soit facturé séparément pour les mises à jour de statut de présence qui incluent des informations de présence à valeur ajoutée.

2. Procédé selon la revendication 1, **caractérisé en ce que** ladite analyse comprend
la vérification de si les données de présence comprennent un attribut de présence en texte libre ajouté par l'utilisateur lié au premier terminal d'utilisateur (UE1), où, s'il est détecté que les données de présence comprennent un attribut de présence en texte libre lié au premier terminal d'utilisateur (UE1), le procédé comprend
l'indication que les données de présence comprennent des informations de présence à valeur ajoutée liées au premier terminal d'utilisateur (UE1).

3. Procédé selon la revendication 1 ou 2, **caractérisé en ce que** ladite analyse comprend
la vérification de si les informations de présence liées au premier terminal d'utilisateur (UE1) ont été mises à jour au moins un nombre prédéterminé de fois dans une période de temps prédéterminée, où, s'il est détecté que les informations de présence ont été mises à jour au moins un nombre prédéterminé de fois dans une période de temps prédéterminée, le procédé comprend
l'indication que les données de présence comprennent des informations de présence à valeur ajoutée liées au premier terminal d'utilisateur (UE1).

4. Procédé selon la revendication 1, 2 ou 3, **caractérisé en ce que** l'analyse est effectuée en comparant les informations de présence reçues liées au premier terminal d'utilisateur (UE1), avec des informations de présence stockées précédemment liées au premier terminal d'utilisateur (UE1) .

5. Procédé selon l'une quelconque des revendications 1 à 4, **caractérisé en ce que** ladite indication comprend le stockage d'informations sur les informations de présence à valeur ajoutée liées au premier terminal d'utilisateur (UE1) à des fins de facturation d'utilisateur à valeur ajoutée.

6. Procédé selon l'une quelconque des revendications 1 à 5, **caractérisé en ce que** ladite indication comprend la transmission d'informations sur les informations de présence à valeur ajoutée liées au premier terminal d'utilisateur (UE1) à un autre appareil de réseau à des fins de facturation d'utilisateur à valeur ajoutée.

7. Procédé selon l'une quelconque des revendications 1 à 6, **caractérisé en ce que** le procédé comprend l'optimisation de la facturation d'utilisateur en facturant l'utilisateur pour la transmission d'informations de présence autres que des informations de présence génériques et/ou non mises à jour.

8. Procédé selon l'une quelconque des revendications 1 à 7, **caractérisé en ce que** les données de présence comprennent le statut de présence de l'utilisateur du premier terminal d'utilisateur concernant la messagerie multimédia, l'envoi de photographies, l'envoi d'images, un clip vocal, un clip vidéo, la messagerie instantanée, le partage de vidéos, des listes d'amis, un répertoire amélioré, un dialogue en ligne, un historique de messagerie, un appel enrichi et/ou une possibilité de voir ce que je vois.

9. Système de communications (S) comprenant un appareil de réseau (PS1, proxy IPX, PS2) capable de gérer des informations de présence liées à un premier terminal d'utilisateur (UE1), dans lequel en réponse à la détection, dans l'appareil de réseau (PS1, proxy IPX , PS2), que des données de présence reçues d'un premier terminal d'utilisateur (UE1) comprennent des informations de présence modifiées liées au premier terminal d'utilisateur (UE1), le système est configuré pour
analyser le type de la modification, où, en réponse à la détection que les données de présence comprennent un type prédéterminé d'informations de présence modifiées, le système est configuré pour
indiquer que les données de présence reçues du premier terminal d'utilisateur (UE1) comprennent des informations de présence à valeur ajoutée liées au premier terminal d'utilisateur (UE1), afin de suivre plus en détail de telles mises à jour de statut de présence du premier terminal d'utilisateur qui incluent des informations de présence à valeur ajoutée afin que le premier terminal d'utilisateur soit facturé séparément pour les mises à jour de statut de présence qui incluent des informations de présence à valeur ajoutée.

10. Système selon la revendication 9, **caractérisé en ce qu'**il est configuré pour
vérifier si les données de présence comprennent un attribut de présence en texte libre ajouté par l'utilisateur lié au premier terminal d'utilisateur (UE1), où, s'il est détecté que les données de présence comprennent un attribut de présence en texte libre lié au premier terminal d'utilisateur (UE1), le système est configuré pour
indiquer que les données de présence comprennent des informations de présence à valeur ajoutée liées au premier terminal d'utilisateur (UE1).

11. Système selon la revendication 9 ou 10, **caractérisé en ce qu'**il est configuré pour
vérifier si les informations de présence liées au premier terminal d'utilisateur (UE1) ont été mises à jour au moins un nombre prédéterminé de fois dans une période de temps prédéterminée, où, s'il est détecté que les informations de présence ont été mises à jour au moins un nombre prédéterminé de fois dans une période de temps prédéterminée, le système est configuré pour
indiquer que les données de présence comprennent des informations de présence à valeur ajoutée liées au premier terminal d'utilisateur (UE1).

12. Système selon la revendication 9, 10 à 11, **caractérisé en ce que** le système est configuré pour stocker des informations sur les informations de présence à valeur ajoutée liées au premier terminal d'utilisateur (UE1) à des fins de facturation d'utilisateur à valeur ajoutée.

13. Système selon l'une quelconque des revendications 9 à 12, **caractérisé en ce que** le système est configuré pour transmettre des informations sur les informations de présence à valeur ajoutée liées au premier terminal d'utilisateur (UE1) à un autre appareil de réseau à des fins de facturation d'utilisateur à valeur ajoutée.

14. Appareil de réseau (PS1, proxy IPX, PS2) pour un système de communications (S), dans lequel l'appareil de réseau (PS1, proxy IPX, PS2) est capable de gérer des informations de présence liées à un premier terminal d'utilisateur (UE1), dans lequel en réponse à la détection que des données de présence reçues d'un premier terminal d'utilisateur (UE1) comprennent des informations de présence modifiées liées au premier terminal d'utilisateur (UE1), l'appareil de réseau (PS1, proxy IPX, PS2) est configuré pour
analyser le type de la modification, où, en réponse à la détection que les données de présence comprennent un type prédéterminé d'informations de présence modifiées, l'appareil de réseau (PS1, proxy IPX, PS2) est configuré pour
indiquer que les données de présence reçues du premier terminal d'utilisateur (UE1) comprennent des informations de présence à valeur ajoutée liées au premier terminal d'utilisateur (UE1), afin de suivre plus en détail de telles mises à jour de statut de présence du premier terminal d'utilisateur qui incluent des informations de présence à valeur ajoutée afin que le premier terminal d'utilisateur soit facturé séparément pour les mises à jour de statut de présence qui incluent des informations de présence à valeur ajoutée.

15. Appareil de réseau selon la revendication 14, **caractérisé en ce qu'**il est configuré pour
vérifier si les données de présence comprennent un attribut de présence en texte libre ajouté par l'utilisateur lié au premier terminal d'utilisateur (UE1), où, s'il est détecté que les données de présence comprennent un attribut de présence en texte libre lié au premier terminal d'utilisateur (UE1), l'appareil de réseau est configuré pour
indiquer que les données de présence comprennent des informations de présence à valeur ajoutée liées au premier terminal d'utilisateur (UE1).

16. Appareil de réseau selon la revendication 14 ou 15, **caractérisé en ce qu'**il est configuré pour
vérifier si les informations de présence liées au premier terminal d'utilisateur (UE1) ont été mises à jour au moins un nombre prédéterminé de fois dans une période de temps prédéterminée, où, s'il est détecté que les informations de présence ont été mises à jour au moins un nombre prédéterminé de fois dans une période de temps prédéterminée, l'appareil de réseau est configuré pour
indiquer que les données de présence comprennent des informations de présence à valeur ajoutée liées au premier terminal d'utilisateur (UE1).

17. Appareil de réseau selon la revendication 14, 15 ou 16, **caractérisé en ce qu'**il est configuré pour effectuer l'analyse en comparant les informations de présence reçues liées au premier terminal d'utilisateur (UE1), avec des informations de présence stockées précédemment liées au premier terminal d'utilisateur (UE1).

18. Appareil de réseau selon l'une quelconque des revendications 14 à 17, **caractérisé en ce qu'**il est configuré pour stocker des informations sur les informations de présence à valeur ajoutée liées au premier terminal d'utilisateur (UE1) à des fins de facturation d'utilisateur à valeur ajoutée.

19. Appareil de réseau selon l'une quelconque des revendications 14 à 18, **caractérisé en ce qu'**il est configuré pour transmettre des informations sur les informations de présence à valeur ajoutée liées au premier terminal d'utilisateur (UE1) à un autre appareil de réseau à des fins de facturation d'utilisateur à valeur ajoutée.

20. Appareil de réseau selon l'une quelconque des revendications 14 à 19, **caractérisé en ce qu'**il est configuré pour optimiser la facturation d'utilisateur en facturant l'utilisateur pour la transmission d'informations de présence autres que des informations de présence génériques et/ou non mises à jour.

21. Appareil de réseau selon l'une quelconque des revendications 14 à 20, **caractérisé en ce qu'**il comprend un serveur proxy IPX (serveur IPX) d'un réseau d'interconnexion (IPX), un premier serveur de présence (PS1) d'un premier réseau (N1) où le premier terminal d'utilisateur est localisé, et/ou un second serveur de présence (PS2) d'un second réseau (N2) où un terminal d'utilisateur observateur est localisé.
